# EUROPEAN PATENT SPECIFICATION

(11) **EP 0 606 744 B1**
(45) Date of publication and mention of the grant of the patent: **13.03.2002**
(21) Application number: 93310132.1
(22) Date of filing: 15.12.1993
(51) Int. Cl.: H04M 1/66, H04M 1/725

(54) **Call management in a telecommunication system**
Anrufverwaltung in einem Telekommunikationssystem
Gestion d'appels dans un système de télécommunication

(30) Priority: 15.12.1992 GB 9226104
(43) Date of publication of application: 20.07.1994
(73) Proprietor: Carnall, Murat Anthony, Horsforth, Leeds LS18 4PE (GB)
(72) Inventor: Carnall, Murat Anthony, Horsforth, Leeds LS18 4PE (GB)
(74) Representative: Wilson, Peter

(56) References cited:
- US-A- 4 446 334
- US-A- 4 571 455
- US-A- 4 677 660
- US-A- 4 754 473
- US-A- 4 837 797
- US-A- 5 036 513
- US-A- 5 062 133
- US-A- 5 151 972

## Description

The present invention relates to telecommunications and is concerned particularly with telephones.

US-A-4754473 (Edwards) discloses a communication system in which a caller may, by inputting a code, inhibit the ringing of a called telephone and then send data to the called telephone for processing and re-transmitting to another remote address. The advantage of this apparatus is that it allows signals to be sent via a conventional land line and then from a called destination sent further, e.g. by radio, to a further receiving device. The apparatus does not need to transmit by radio over the entire distance from caller to required location but instead advantageously utilises existing land lines.

US-A-4571455 (Labock) concerns a system primarily for use as a "babysitter" wherein a monitor unit may be accessed remotely by a user over a conventional telephone line. Upon connection the user may activate a microphone in the monitoring device by sending a coded signal down the telephone line. The remote caller may then listen to sounds in the location of the monitor unit.

US-A-5151972 (Lorenz) concerns apparatus for automatically differentiating between incoming voice telephone and facsimile or modem calls and routing the incoming call appropriately, particularly when a telephone and facsimile or modem are sharing access to a single telephone line. The specification discloses apparatus and method for automatically coupling a telephone or "terminal device" (i.e. modem or facsimile) in response to a signal from a caller.

According to one aspect of the present invention there is provided a telecommunication system comprising a plurality of telephones for communicating audio data with each other, the system comprising first and second telephones, the first telephone for requesting communication with the second telephone, the second telephone comprising an indication means for providing an indication when the first telephone requests communication and a microphone for detecting incident audio signals, characterised in that the first telephone is arranged in use to transmit a command signal to the second telephone upon receipt of which the second telephone automatically communicates said incident audio signals to the first telephone via at least one communication medium, the second telephone further including inhibiting means for at least partially suppressing the operation of the indication means, which inhibiting means is activated upon receipt by the second telephone of an inhibit signal from the first telephone.

The command signal and the inhibit signal may comprise a common signal.

Preferably the indication means provide a visual indication. Alternatively or additionally the indication means may provide an audible indication.

The inhibiting means is preferably arranged to prevent the operation of the indication means.

The communication medium may comprise radio.

In another aspect, the invention provides a mobile telephone for communicating audio data with a calling telephone, said mobile telephone further comprising an indication means for providing an indication when the calling telephone requests communication and a microphone for detecting incident audio signals, characterised in that when said mobile telephone receives from a calling telephone a command signal, said mobile telephone is arranged to automatically communicate said incident audio signals to the calling telephone via at least one communication medium, the mobile telephone further including inhibiting means for at least partially suppressing the operation of the indication means, which inhibiting means is activated upon receipt by the mobile telephone of an inhibit signal from the calling telephone.

The command signal and the inhibit signal may comprise a common signal.

Other preferred features of the present invention are to be found in the appendant claims to which reference should now be made.

The invention may be carried into practice in various ways but embodiments will now be described by way of example with reference to the accompanying diagrammatic drawings in which:
Figure 1 shows schematically a receiving telecommunications device according to an embodiment of the present invention, and
Figure 2 is a flow diagram of operation of the device of figure 1; and
Figure 3 shows schematically a receiving telecommunications device according to an alternative embodiment of the present invention.

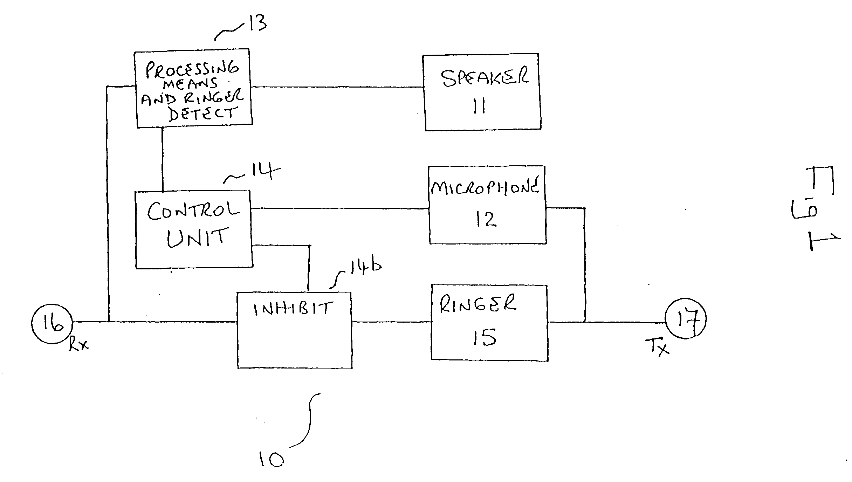

Referring to figure 1, this shows generally at 10 a telephone having a speaker 11, a microphone 12, processing means 13, a control unit 14 and an audible indicator 15.

When the telephone 10 is used to conventionally communicate with another telephone (not shown), for example to enable respective users of the telephones to speak to each other, electronic signals corresponding to the speech are input to and output from the telephone 10 at input 16 and output 17 respectively. The input 16 and output 17 may be connected to a radio transmitter/receiver (not shown) of a mobile telephone.

The processing means 13 electronically processes the signals and in the case of incoming signals these are relayed from the input 16 to the speaker 11. In the case of outgoing signals these are relayed from the microphone 12 to the output 17. Conventionally, when another telephone requests communication with the telephone 10, the processing means activates the audible indicator 15 which alerts a user to the incoming call by making an appropriate sound. If the user then wishes to answer the call he establishes the channel of communication by pressing the appropriate button (not shown) or in some cases by lifting the telephone from a mounting location. Once the channel of communication has been established the processing means processes the incoming and outgoing signals in a manner described above.

The purpose of the control unit 14 is to identify the presence of a command signal with the incoming call. If a user of another telephone (not shown) wishes to call telephone 10, the telephone number of telephone 10 is dialled in the conventional way. However, if during a time interval of predetermined length beginning immediately after the telephone number of telephone 10 is dialled, the caller inputs a command code via his conventional telephone key pad, this sends a command signal to telephone 10 which is identified by control unit 14. Upon identification of the command signal the control unit 14 inhibits the operation of the audible indicator 15, by means of inhibit unit 14b so that no indication is made of the incoming call. Additionally, the control unit 14 automatically establishes the channel of communication, as though the user had answered the call.

Once the channel of communication has been established in this way any sounds detected by the microphone 12 are processed by the processing means 13 and are sent to output 17. The caller can then effectively hear on his own telephone (not shown) everything which is detected by the microphone 12 in telephone 10. Similarly any sound made by the caller on his telephone is emitted from the speaker 11 of telephone 10.

The channel of communication then remains open until the caller chooses to close it by conventionally pressing a cut off button on his telephone (not shown) or replacing his telephone on its mounting.

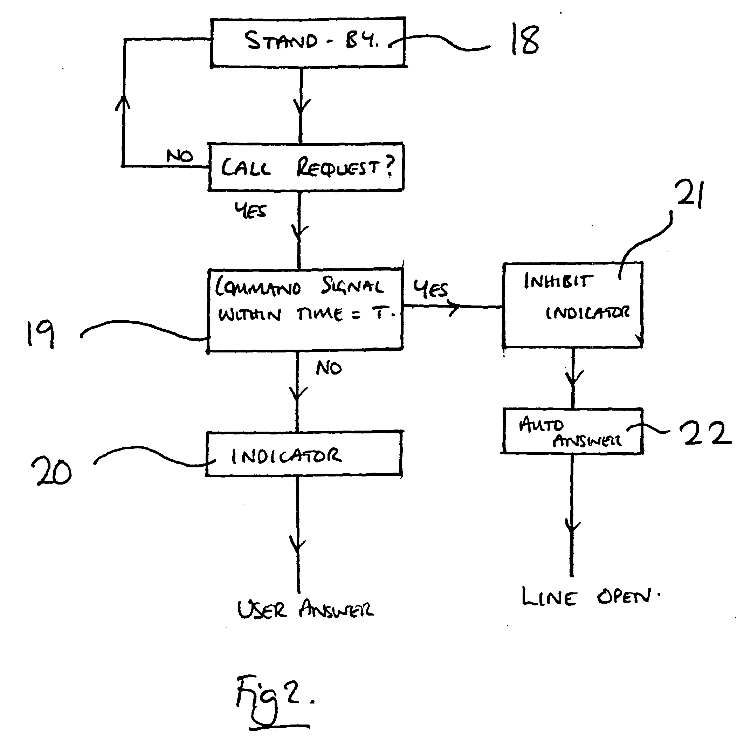

Figure 2 represents, in flow diagram form, the above mentioned operation of telephone 10. At a step 18 the telephone 10 is awaiting calls and is in a so-called "stand-by" condition in which it checks for the presence of a call request in a conventional way. If a call request is detected the control means 14 looks for the presence of a command signal within a predetermined time interval t at a step 19. In the absence of a command signal the operation of the telephone 10 is that of a conventional telephone, ie. the audible indication is given at step 20 and the telephone rings awaiting a user to answer.

If, however, a command signal is present at step 19 the control unit 14 inhibits the audible indication at step 21 by means of inhibit unit 14b of Figure 1 and automatically establishes the line of communication at step 22. The telephone 10 then operates in a conventional way described above.

The above described embodiment of the invention enables a caller to listen to ambient sounds in the vicinity of telephone 10 from a remote location. A caller can, for example, telephone his house when he is out to check that no one has intruded therein. Since the conventional audible indicate is inhibited, for example either by muting it or suppressing it completely, any intruder need not be alerted to the call. Similarly a mother may for example telephone her hotel room to check whether her baby is crying. The baby would not be disturbed by the call since the audible indication could be suppressed.

Use of the device may be charged for separately by telecommunications operating companies. For example in the case of a mobile telephone a charge is made for the number and length of occasions on which the telephone is used. To enable successful monitoring of the command signal service - for which an extra charge per call may be made - either the caller's telephone may be made to notify the operating company upon the selection of the command mode, or alternatively the receiving telephone may be made to make a notification upon receipt of the command signal. In either case notification may be made to the operating company by the presence of a notification signal such as a coded signal or a signal of predetermined frequency when the command service is used.

After a predetermined time interval during which no such command signal is transmitted, the device would enable the ringing of the receiving telephone and a conventional telephone call would be possible.

The use of a synthesised ringing signal from the device would not alert a conventional caller to the existence of the facility.

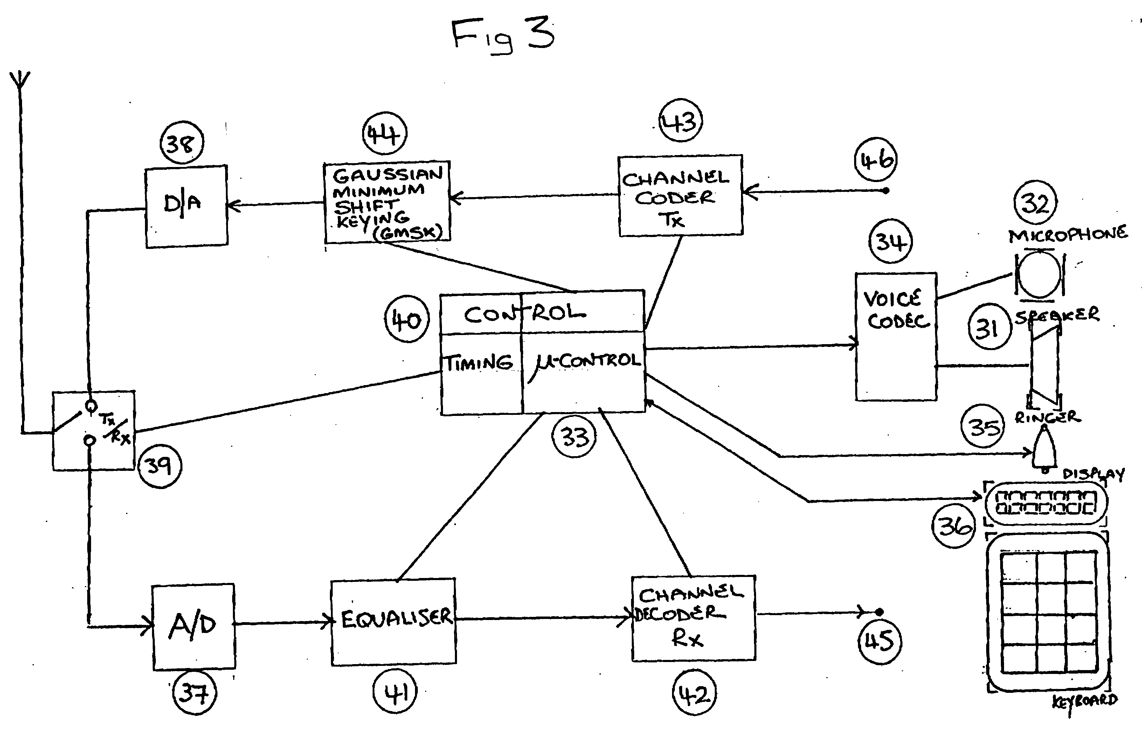

Figure 3 shows generally at 30 a digital mobile telephone (such as a GSM telephone) having a speaker 31, a microphone 32, a micro-controller 33, a voice codec device 34, an audible indicator/ringer 35, a display (liquid crystal or other) and key-pad 36. When another phone (not shown) communicates conventionally with this telephone, for example to enable respective users of the telephone as they speak to each other, electronic signals corresponding to the speech are input to and output from the telephone 30 at input 37 and output 38 respectively connected to a radio transmitter/receiver which is controlled by a switch 39 and a timer 40. The processing means 33 electronically processes the signals and in the case of incoming signals these are equalised at 41 and decoded at 42 and relayed through the voice codec 34 to the speaker 31. Outgoing signals from the microphone 32 are relayed via the voice codec 34 to the micro-controller 33 then to the channel code 43 and to the modulator 44 and finally to the output 38 for transmission. The control unit 40 and the micro-controller 33 identify the presence of a command signal with the incoming calls. If a user of another telephone (not shown) wishes to call telephone 30, the telephone number of telephone 30 is keyed in the conventional way. However, if a code sequence is added to the telephone number immediately following the telephone number, this is identified by the micro-controller 33. The micro-controller 33 then inhibits the operation of the ringer 35, the display 36, and a speaker 35, so that no indication is made of the incoming call. The micro-controller establishes the channel of communication as though the user had answered the call. If the user of the telephone 30 depresses any key of the key-pad 36, the micro-controller closes the communications channel and resets the telephone 30, speaker 31, ringer 35 and display 36 to normal operation.

Although the invention has been described above in relation to telephones, it may with suitable modification be used with other devices such that for example a code may activate a modem which relays data to the caller or calling device which download the data onto a computer.

## Claims

1. A telecommunication system comprising a plurality of telephones for communicating audio data with each other, the system comprising first and second telephones, the first telephone for requesting communication with the second telephone, the second telephone being a mobile telephone and comprising an indication means(15) for providing an indication when the first telephone requests communication and a microphone (12)for detecting incident audio signals **characterised in that** the first telephone is arranged in use to transmit a command signal to the second telephone upon receipt of which the second telephone automatically communicates said incident audio signals to the first telephone via at least one communication medium, the second telephone further including inhibiting means(14b) for at least partially suppressing the operation of the indication means, which inhibiting means is activated upon receipt by the second telephone of an inhibit signal from the first telephone.

2. A system according to Claim 1, wherein the command signal and the inhibit signal comprise a common signal.

3. A system according to Claim 1 or claim 2 wherein the indication means provide a visual indication.

4. A system according to any of Claims 1 to 3 wherein the indication means provide an audible indication.

5. A system according to any of Claims 1 to 4 wherein the inhibiting means prevent the operation of the indication means.

6. A system according to any of Claims 1 to 5 wherein the communication medium comprises radio.

7. A mobile telephone (10) for communicating audio data with a calling telephone, said mobile telephone further comprising an indication means (15) for providing an indication when the calling telephone requests communication and a microphone (12) for detecting incident audio signals, **characterised in that** when said mobile telephone receives from a calling telephone a command signal, said mobile telephone is arranged to automatically communicate said incident audio signals to the calling telephone via at least one communication medium, the mobile telephone further including inhibiting means (14b) for at least partially suppressing the operation of the indication means, which inhibiting means is activated upon receipt by the mobile telephone of an inhibit signal from the calling telephone.

8. A mobile telephone according to Claim 7 wherein the command signal and the inhibit signal comprise a common signal.

9. A mobile telephone according to Claim 7 or 8 wherein the communication medium comprises radio.

10. A mobile telephone according to any of Claims 7 to 9 wherein the indication means is arranged to provide a visual indication.

11. A mobile telephone according to any of Claims 7 to 10 wherein the indication means is arranged to provide an audible indication.

12. A mobile telephone according to any of Claims 7 to 11 wherein the inhibiting means is arranged to prevent the operation of the indication means.

## Patentansprüche

1. Ein Telekommunikationssystem, dass eine Vielzahl von Telefonen zur Übermittlung von Audiodaten untereinander umfasst, wobei das System ein erstes und zweites Telefon aufweist, wobei das erste Telefon zur Beantragung einer Kommunikation mit dem zweiten Telefon dient, wobei das zweite Telefon ein Mobiltelefon ist und ein Meldemittel (15) zur Bereitstellung einer Meldung, wenn das erste Telefon eine Kommunikation beantragt, und ein Mikrophon (12) zum Erkennen von eingehenden Audiosignalen aufweist, **dadurch gekennzeichnet, dass** das erste Telefon im Gebrauch angeordnet ist, um ein Befehlssignal an das zweite Telefon zu übertragen, nach Empfang dessen, das zweite Telefon automatisch die eingehenden Audiosignale an das erste Telefon über mindestens ein Kommunikationsmedium übermittelt, wobei das zweite Telefon ferner ein Sperrmittel (14b) zur mindestens teilweisen Unterdrückung des Betriebs der Meldemittel aufweist, wobei das Sperrmittel nach Empfang eines Sperrsignals von dem ersten Telefon durch das zweite Telefon aktiviert wird.

2. Ein System gemäß Anspruch 1, wobei das Befehlssignal und das Sperrsignal ein gemeinsames Signal aufweisen.

3. Ein System gemäß Anspruch 1 oder 2, wobei das Meldemittel eine visuelle Meldung bereitstellt.

4. Ein System gemäß einem der Ansprüche 1-3, wobei das Meldemittel eine hörbare Meldung bereitstellt.

5. Ein System gemäß einem der Ansprüche 1-4, wobei das Sperrmittel den Betrieb des Meldemittels unterbindet.

6. Ein System gemäß einem der Ansprüche 1-5, wobei das Kommunikationsmedium Funk umfasst.

7. Ein Mobiltelefon (10) zur Übermittlung von Audiodaten mittels eines rufenden Telefons, wobei das Mobiltelefon ferner ein Meldemittel (15) zur Bereitstellung einer Meldung, wenn das erste Telefon eine Kommunikation beantragt, und ein Mikrophon (12) zum Erkennen von eingehenden Audiosignalen aufweist, **dadurch gekennzeichnet, dass**, wenn das Mobiltelefon von dem rufenden Telefon ein Befehlssignal empfängt, das Mobiltelefon angeordnet ist, automatisch die eingehenden Audiosignale an das rufende Telefon über mindestens ein Kommunikationsmedium zu übermitteln, wobei das Mobiltelefon ferner ein Sperrmittel (14b) zur mindestens teilweisen Unterdrückung des Betriebs der Meldemittel aufweist, wobei das Sperrmittel nach Empfang eines Sperrsignals von dem rufenden Telefon durch das Mobiltelefon aktiviert wird.

8. Ein Mobiltelefon gemäß Anspruch 7, wobei das Befehlssignal und das Sperrsignal ein gemeinsames Signal aufweisen.

9. Ein Mobiltelefon gemäß Anspruch 7 oder 8, wobei das Kommunikationsmedium Funk umfasst.

10. Ein Mobiltelefon gemäß einem der Ansprüche 7-9, wobei das Meldemittel angeordnet ist, um eine visuelle Meldung bereit zu stellen.

11. Ein Mobiltelefon gemäß einem der Ansprüche 7-10, wobei das Meldemittel angeordnet ist, um eine hörbare Meldung bereit zu stellen.

12. Ein Mobiltelefon gemäß einem der Ansprüche 7-11, wobei das Sperrmittel angeordnet ist, um den Betrieb des Meldemittels zu unterbinden.

## Revendications

1. Système de télécommunication comprenant une pluralité de téléphones en vue d'une transmission de données audio les uns avec les autres, le système comprenant des premier et second téléphones, le premier téléphone étant destiné à demander une liaison avec le second téléphone, le second téléphone étant un téléphone mobile et comprenant un moyen d'indication (15) destiné à fournir une indication lorsque le premier téléphone demande une liaison et un microphone (12) destiné à détecter des signaux audio incidents, **caractérisé en ce que** le premier téléphone est agencé en utilisation pour transmettre un signal d'instruction au second téléphone, à la réception duquel le second téléphone communique automatiquement lesdits signaux audio incidents au premier téléphone par l'intermédiaire d'au moins un support de communication, le second téléphone comprenant en outre un moyen d'interdiction (14b) destiné à réduire au moins partiellement le fonctionnement du moyen d'indication, lequel moyen d'interdiction est activé lors de la réception par le second téléphone d'un signal d'interdiction provenant du premier téléphone.

2. Système selon la revendication 1, dans lequel le signal d'instruction et le signal d'interdiction comprennent un signal commun.

3. Système selon la revendication 1 ou la revendication 2, dans lequel le moyen d'indication fournit une indication visuelle.

4. Système selon l'une quelconque des revendications 1 à 3, dans lequel le moyen d'indication fournit une indication audible.

5. Système selon l'une quelconque des revendications 1 à 4, dans lequel le moyen d'interdiction empêche le fonctionnement du moyen d'indication.

6. Système selon l'une quelconque des revendications 1 à 5, dans lequel le support de communication comprend la radio.

7. Téléphone mobile (10) en vue d'une transmission de données audio avec un téléphone appelant, ledit téléphone mobile comprenant en outre un moyen d'indication (15) destiné à fournir une indication lorsque le téléphone appelant demande une liaison et un microphone (12) destiné à détecter des signaux audio incidents, **caractérisé en ce que** lorsque ledit téléphone mobile reçoit à partir d'un téléphone appelant un signal d'instruction, ledit téléphone mobile est agencé pour communiquer de façon automatique lesdits signaux audio incidents au téléphone appelant par l'intermédiaire d'au moins un support de communication, le téléphone mobile comprenant en outre un moyen d'interdiction (14b) destiné à réduire au moins partiellement le fonctionnement du moyen d'indication, lequel moyen d'interdiction est activé lors de la réception par le téléphone mobile d'un signal d'interdiction provenant du téléphone appelant.

8. Téléphone mobile selon la revendication 7, dans lequel le signal d'instruction et le signal d'interdiction comprennent un signal commun.

9. Téléphone mobile selon la revendication 7 ou 8, dans lequel le support de communication comprend la radio.

10. Téléphone mobile selon l'une quelconque des revendications 7 à 9, dans lequel le moyen d'indication est agencé pour fournir une indication visuelle.

11. Téléphone mobile selon l'une quelconque des revendications 7 à 10, dans lequel le moyen d'indication est agencé pour fournir une indication audible.

12. Téléphone mobile selon l'une quelconque des revendications 7 à 11, dans lequel le moyen d'interdiction est agencé pour empêcher le fonctionnement du moyen d'indication.
